# EUROPÄISCHE PATENTSCHRIFT

(11) **EP 1 979 387 B1**
(45) Veröffentlichungstag und Bekanntmachung des Hinweises auf die Patenterteilung: **07.07.2010**
(21) Anmeldenummer: 07703817.2
(22) Anmeldetag: 12.01.2007
(51) Int. Cl.: C08F 255/00, C08L 51/00, C08F 255/02, C08L 51/06, C08F 255/08, C08L 51/04, C08F 265/06, C08F 210/00

(54) **POLYMERISATPULVER MIT HOHEM KAUTSCHUKANTEIL UND DEREN HERSTELLUNG**
POLYMER POWDER WITH HIGH RUBBER CONTENT AND PRODUCTION THEREOF
POUDRE POLYMERIQUE AYANT UNE TENEUR ELEVEE EN CAOUTCHOUC ET SA FABRICATION

(30) Priorität: 19.01.2006 EP 06100579
(43) Veröffentlichungstag der Anmeldung: 15.10.2008
(73) Patentinhaber: BASF SE, 67056 Ludwigshafen (DE)
(72) Erfinder: BOTHE, Marc, 67117 Limburgerhof (DE); VENKATESH, Rajan, 68167 Mannheim (DE); KRÜGER, Christian, 67346 Speyer (DE)
(86) Internationale Anmeldenummer: PCT/EP2007/050275
(87) Internationale Veröffentlichungsnummer: WO 2007/082839

(56) Entgegenhaltungen:
- WO-A-99/37700
- WO-A-2006/001189
- DE-A1- 2 610 623
- US-A- 5 219 935
- US-B1- 6 201 064

## Beschreibung

Die vorliegende Erfindung betrifft Polymerisatpulver mit einem hohen Kautschukanteil, und deren Verwendung als Schlagzähmodifier für Hart-Polyvinylchlorid (PVC)-Anwendungen, sowie thermoplastische halogenhaltige Formmassen enthaltend das Polymerisatpulver und die Verwendung der Formmassen zur Herstellung von Formkörpern.

Das Prinzip der Schlagzähmodifizierung beruht darauf, dass in die kontinuierliche PVC-Phase eine feindisperse Phase eines weichen, elastischen Polymeren eingelagert wird. Diese "Kautschuk-Phase" ermöglicht bei Schlagbeanspruchung eine verbesserte Energiedissipation.

Derartige Schlagzähmodifier werden gewöhnlich durch eine mehrstufige radikalische Emulsionspolymerisation hergestellt.

Sie bestehen aus Emulsionspolymerisatteilchen, die eine Kern-Schale-Struktur aufweisen, wobei die Schale aus einem harten Polymerisat und der Kern aus einem weichen, vernetzten Kautschukpolymer besteht.

Die durch Emulsionspolymerisation erhältliche Modifierdispersion wird durch Sprühtrocknung oder durch Fällung und anschliessendes Trocknen des Koagulates in Pulverform überführt, mit pulverförmigem PVC und gegebenenfalls üblichen Zusatzstoffen gemischt.

Üblicherweise werden zur Herstellung der Kautschukphase radikalisch polymerisierbare Monomere mit einer Glasübergangstemperatur des Polymerisats von < 0 °C, vorzugsweise < -40 °C verwendet. Die üblicherweise verwendeten Monomere sind vielfach beschrieben, so in EP 1201692 und EP 1541603. Es handelt sich um C1-C18-Alkylacrylate wie Butylacrylat, Ethylacrylat, 2-Ethylhexylacrylat und Octylacrylat, um Diene wie Butadien und Isopren, um Vinylacetat und um deren Copolymere, untereinander und beispielsweise auch mit Vinylaromaten wie Styrol, sowie mit Methacrylaten, Acrylnitril, Acrylsäure und Methacrylsäure. Das Dokument D1 US 6.201.064 B1 offenbart (s. Beispiel 5) ein Verfahren zur Herstellung eines Polymerisatpulvers enthaltend Emulsionspolymerisatteilchen mit einem Anteil an vernetztem Polymerisat > 50 %, enthaltend Polylsobutylen, n- Butylacrylat als Monomer B und Allylmethacrylat, **dadurch gekennzeichnet, dass** B und C auf Polylsobutylen gepfropft werden. Auch ausweist dieses Polymerizatpulver eine Kernschale-Struktur.

Aufgabe der vorliegenden Erfindung war die Bereitstellung eines Polymerpulvers mit hohem Kautschukanteil, das als Schlagzähmodifier für halogenhaltige Thermoplasten verwendet werden kann, mit einem Anteil an besonders günstig verfügbaren Monomeren.

Die Aufgabe wurde erfindungsgemäß gelöst durch ein

Polymerisatpulver mit einem Anteil an vernetztem Polymerisat A > 50 %, wobei Polymerisat A

| | |
|---|---|
| 1 bis 50 Gew.-% | wenigstens eines 2 bis 12 C-Atome aufweisenden Alkens [Monomer A] und |
| 30 bis 99 Gew.-% | wenigstens eines Esters auf Basis einer 3 bis 6 C-Atome aufweisenden α,β-monoethylenisch ungesättigten Mono- oder Dicarbonsäure und eines 1 bis 18 C-Atome aufweisenden Alkanols [Monomer B] und |
| 0,1 bis 20 Gew.-% | wenigstens einer vernetzend wirkenden, wenigstens zwei nicht konjugierte Vinylgruppen aufweisenden Verbindung [Monomer C] sowie gegebenenfalls |
| 0 bis 10 Gew.-% | einer 3 bis 6 C-Atome aufweisenden α,β-monoethylenisch ungesättigten Mono- oder Dicarbonsäure und/oder deren Amid [Monomer D] und |
| 0 bis 30 Gew.-% | einer sich von den Monomeren A bis D unterscheidenden α,β-ethylenisch ungesättigten Verbindung [Monomer E] |

als Monomerbausteine enthält und sich die Monomeren A bis E zu 100 Gew.-% addieren.

Ein weiterer Gegenstand der Erfindung ist die Verwendung der erfindungsgemäßen Polymerisatpulver als Schlagzähmodifizierungsmittel für halogenhaltige Thermoplasten. Ebenfalls Gegenstand der Erfindung sind PVC-Formmassen, enthaltend die nach dem erfindungsgemäßen Verfahren hergestellten Polymerisatpulver sowie Formgegenstände, hergestellt unter Verwendung der so hergestellten PVC-Massen.

Der getrocknete pulverförmige Schlagzähmodifier wird in Mengen von 1 bis 25 Gew.-% mit PVC-Pulver und üblichen Zusatzstoffen, z. B. Füllstoffen, Stabilisatoren und Verarbeitungshilfsmittel, gemischt und nach üblichen Methoden zu hochschlagzähen PVC-Formteilen verarbeitet.

Das Polymerisatpulver enthält Emulsionspolymerisatteilchen, die eine Kern-Schale-Struktur aufweisen, wobei die Schale aus einem harten Polymerisat und der Kern aus einem weichen, vernetzten Kautschukpolymer besteht. Derartige Polymerpulver können als Schlagzähmodifier für halogenhaltige Thermoplasten, vorzugsweise Polyvinylchlorid, verwendet werden.

Zweckmäßigerweise ist daher das Polymerisat der Schale mit Polyvinylchlorid (PVC) verträglich.

Das erfindungsgemäße Polymerisatpulver wird vorzugsweise durch wässrige radikalische Emulsionspolymerisation hergestellt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthe-tischer Hochpolymerer, F. Hölscher, Springer-Verlag, Berlin (1969)]. Die radikalisch induzierte wässrige Emulsionspolymerisationsreaktionen erfolgen üblicherweise dergestalt, dass man die ethylenisch ungesättigten Monomere unter Mitverwendung von Dispergiermitteln, im wässrigen Medium in Form von Monomerentröpfchen dispers verteilt und mittels eines radikalischen Polymerisationsinitiators polymerisiert.

Die Herstellung des erfindungsgemäßen Polymerisatpulvers geschieht zweckmäßig durch mindestens zweistufige wässrige radikalische Emulsionspolymerisation. Dabei wird zunächst das Polymerisat A als Polymerisatdispersion A in mindestens einem Schritt hergestellt und in mindestens einem weiteren Schritt ein Polymerisat B in Gegenwart der Polymerisatdispersion A hergestellt. Die dabei entstehende Polymerisatdispersion B hat vorzugsweise eine Kern-Schale-Struktur, bei der der Kern vom Polymerisat A gebildet wird und die Schale vom Polymerisat B.

Als Monomere A können alle linearen, verzweigten oder cyclischen 2 bis 12 C-Atome, bevorzugt 5 bis 10 C-Atome und insbesondere bevorzugt 6 bis 8 C-Atome aufweisenden Alkene eingesetzt werden, welche sich radikalisch copolymerisieren lassen und welche neben Kohlenstoff und Wasserstoff keine weiteren Elemente aufweisen. Hierzu zählen beispielsweise die acyclischen Alkene Buten-2, 2-Methylpropen, 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-. Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethyl-hexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1,3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3,4-Methylnonen-3, 5-Methylnonen-3, 6-Methylnonen-3; 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Ddoecen-4, Dodecen-5 oder Dodecen-6 sowie die cyclischen Alkene Cyclopenten, 2-Methylcyclopenten-1, 3-Methylcyclopenten-1, 4-Methylcyclopenten-1; 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo [2.2.2]octen-2, Bicyclo[3.3.1]nonen-2 oder Bicyclo[3.2.2]nonen-6.

Bevorzugt werden die 1-Alkene eingesetzt, beispielsweise Ethen, Propen, Buten-1, Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1 oder 2-Methylocten-1. Vorteilhaft wird als Monomer A ein 6 bis 8 C-Atome aufweisendes Alken, bevorzugt ein 6 bis 8 C-Atome aufweisendes 1-Alken eingesetzt. Insbesondere bevorzugt werden Hexen-1, Hepten-1 oder Octen-1 eingesetzt. Selbstverständlich können auch Gemische vorgenannter Monomere A eingesetzt werden. Es können auch Gasgemische eingesetzt werden, die Monomere A enthalten. In einer bevorzugten Ausführungsform werden C4-Schnitte eines Naphtha-Crackers, insbesondere der Raffinat II-Schnitt (bestehend aus 30 bis 50 Gew.-% n-Buten-1, 30 bis 50 Gew.-% n-Buten-2, 10 bis 30 Gew.-% n-Butan sowie < 10 Gew.-% andere Verbindungen) eingesetzt.

Als Monomere B werden Ester auf Basis einer 3 bis 6 C-Atome, insbesondere einer 3 oder 4 C-Atome aufweisenden α,β-monoethylenisch ungesättigten Mono- oder Dicarbonsäure, wie insbesondere Acrylsäure, Methacrylsäure, Maleinsäure, Fumar-säure und Itaconsäure und eines 1 bis 18 C-Atome aufweisenden Alkanols, vorzugsweise eines 1 bis 8 C-Atome aufweisenden Alkanols und insbesondere eines 1 bis 4 C-Atome aufweisenden Alkanols, wie insbesondere Methanol, Ethanol, n-Propanol, isoPropanol, n-Butanol, 2-Methylpropanol-1, tert.-Butanol, n-Pentanol, 3-Methylbutanol-1, n-Hexanol, 4-Methylpentanol-1, n-Heptanol, 5-Methylhexanol-1, n-Octanol, 6-Methylheptanol-1, n-Nonanol, 7-Methyloctanol-1, n-Decanol, 8-Methylnonanol-1, n-Dodecanol, 9-Methyldecanol-1 oder 2-Ethylhexanol-1 Verwendung. Vorzugsweise werden Acrylsäure- und Methacrylsäuremethyl-, -ethyl-, -n-butyl-, -iso-butyl-, pentyl-, -hexyl-, -heptyl-, -octyl-, -nonyl-, -decyl-, -2-ethylhexyl-, oder dodecylester, Fumar- und Maleinsäuredimethylester oder -di-n-butylester eingesetzt. Selbstverständlich können auch Gemische vorgenannter Ester eingesetzt werden.

Monomere C weisen wenigstens zwei nicht konjugierte ethylenisch ungesättigte Doppelbindungen auf. Beispiele hierfür sind zwei Vinylreste aufweisende Monomere, zwei

Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylen-glykoldiacrylat, 1,3-Propylenglykoldiacrylat, 1,3-Butylenglykoldiacrylat, 1,4-Butylen-glykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykol-dimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienyl-acrylat, Triallylcyanurat oder Triallylisocyanurat. Selbstverständlich können auch Gemische vorgenannter Verbindungen eingesetzt werden.

Als Monomere D werden optional 3 bis 6 C-Atome aufweisende α,β-monoethylenisch ungesättigte Mono- oder Dicarbonsäuren und/oder deren Amide, wie insbesondere Acrylsäure, Methacrylsäure, Maleinsäure, Fumarsäure oder Itaconsäure bzw. Acrylamid oder Methacrylamid eingesetzt. Selbstverständlich können auch Gemische vorgenannter Monomere D eingesetzt werden.

Als Monomere E, welche sich von den Monomeren A bis D unterscheiden, finden beispielsweise α,β-ethylenigch ungesättigte Verbindungen, wie beispielsweise vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyln-butyrat, Vinyllaurat und Vinylstearat, Nitrile α,β-mono- oder diethylenisch ungesättigter Carbonsäuren, wie Acrylnitril, Methacrylnitril, Fumarsäuredinitril, Maleinsäuredinitril sowie 4 bis 8 C-Atome aufweisende konjugierte Diene, wie 1,3-Butadien und Isopren, darüber hinaus Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid oder 2-(1-lmidazolin-2-onyl)ethylmethacrylat Verwendung. Weitere Monomere D weisen wenigstens eine Epoxy-, Hydroxy-, N-Methylol- oder Carbonylgruppe. In diesem Zusammenhang von besonderer Bedeutung sind auch die Methacrylsäure- und Acrylsäure-C₁-C₈-Hydroxy-alkylester wie n-Hydroxyethyl-, n-Hydroxypropyl- oder n-Hydroxybutylacrylat und -methacrylat sowie Verbindungen, wie Glycidylacrylat oder -methacrylat, Diacetonacryl-amid und Acetylacetoxyethylacrylat bzw. -methacrylat. Selbstverständlich können auch Gemische von Monomeren E eingesetzt werden.

Bevorzugt werden jedoch zur radikalisch initiierten wässrigen Emulsionspolymerisation des Polymerisats A

| | |
|---|---|
| 1 bis 49,99 Gew.-% | Monomere A, und |
| 50 bis 98,99 Gew.-% | Monomere B, sowie |
| 0,1 bis 10 Gew.-% | Monomere C |

eingesetzt. Als Monomere A werden insbesondere Buten-1, 2-Methylpropen, Penten-1, Hexen-1, Hepten-1, Octen-1, 3-Methylhexen-1, 3-Methylhepten-1 und/oder 3-Methylocten-1, als Monomere B insbesondere n-Butylacrylat, 2-Ethylhexylacrylat, und als Monomere C insbesondere Allylmethacrylat, Ethylenglykoldiacrylat und 1,4-Butylenglykoldiacrylat eingesetzt.

Insbesondere bevorzugt werden zur radikalisch initiierten wässrigen Emulsionspolymerisation des Polymerisats A

| | |
|---|---|
| 5 bis 40 Gew.-% | Penten-1, Hexen-1 und/oder Octen-1 [Monomere A], und |
| 58 bis 94,9 Gew.-% | n-Butylacrylat und/oder 2-Ethylhexylacrylat [Monomere B], sowie |
| 0,1 bis 2 Gew.-% | Allylmethacrylat und/oder 1,4-Butylenglykoldiacrylat [Monomere C], |

eingesetzt.

Die Monomere für das Polymerisat A werden vorzugsweise so gewählt, dass eine Glasübergangstemperatur des Polymerisats A < 0 °C erhalten wird. Besonders bevorzugt ist eine Glasübergangstemperatur des Polymerisats A < -40°C.

Als Monomere für das Polymerisat B eignen sich alle radikalisch polymerisierbaren Monomere; beispielsweise die als Monomere A-E genannten.

Bei dem Polymerisat B kann es sich um ein vernetztes Polymer handeln. Vorzugsweise ist Polymerisat B ein unvernetztes Polymer.

Die Monomere für das Polymerisat B werden vorzugsweise so gewählt, dass eine Glasübergangstemperatur des Polymerisats B > 20 °C erhalten wird. Besonders bevorzugt ist eine Glasübergangstemperatur des Polymerisats B > 50°C.

In einer bevorzugten Variante besteht das Polymerisat B aus Monomerenbausteinen, die eine Verträglichkeit mit der thermoplastischen Matrix aufweist. In einer besonders bevorzugten Variante handelt es sich beim Polymerisat B um ein Copolymerisat mit einem Anteil an Methylmethacrylat > 50 Gew-%.

Das Mengenverhältnis von Polymerisat A und Polymerisat B ist so zu wählen, dass der Anteil des vernetzten Polymerisats A > 50 Gew.-% beträgt. Es ist bekannt, dass bei der Verwendung eines kautschukhaltigen Polymerpulvers als Schlagzähmodifier für Thermoplaste die Effizienz der schlagzähmodifizierenden Wirkung mit dem Anteil der Kautschukphase steigt. Ein Anteil an Polymerisat A > 70 % ist daher bevorzugt. Besonders bevorzugt ist ein Anteil an Polymerisat A > 85 %. Es ist weiterhin bekannt, dass die resultierenden Pulvereigenschaften mit steigendem Kautschuk-Anteil ungünstiger werden. Da bei einem geringen Anteil des harten Schalen-Polymerisats B diese Schale nicht mehr vollständig geschlossen vorliegt, bewirkt ein dementsprechend hoher Anteil des weichen Kern-Polymerisats A eine starke Klebrigkeit des getrockneten Polymerisats. Durch die Klebrigkeit werden die Pulvereigenschaften stark verschlechtert, die Rieselfähigkeit des Pulvers wird herabgesetzt. Ein Anteil, an Polymerisat B > 3% ist daher bevorzugt. Besonders bevorzugt ist ein Anteil an Polymerisat B > 5 %.

Bei der Herstellung des Polymerisats A durch wässrige radikalische Emulsionspolymerisation kann jeweils wenigstens eine Teilmenge der Monomeren A bis E im wässrigen Reaktionsmedium vorgelegt werden und die gegebenenfalls verbliebene Restmenge dem wässrigen Reaktionsmedium, nach Initiierung der radikalischen Polymerisationsreaktion, diskontinuierlich in einer Portion, diskontinuierlich in mehreren Portionen sowie kontinuierlich mit gleichbleibenden oder sich verändernden Mengenströmen zugegeben werden. Es ist aber auch möglich, im wässrigen Reaktionsmedium wenigstens eine Teilmenge des radikalischen Polymerisationsinitiators vorzulegen, das erhaltene wässrige Reaktionsmedium auf Polymerisationstemperatur aufzuheizen und bei dieser Temperatur die Monomeren A bis E dem wässrigen Reaktionsmedium diskontinuierlich in einer Portion, diskontinuierlich in mehreren Portionen sowie kontinuierlich mit gleichbleibenden oder sich verändernden Mengenströmen zuzugeben. Insbesondere vorteilhaft werden die Monomeren A bis E dem wässrigen Reaktionsmedium in Form einer Mischung zugegeben. Mit Vorteil erfolgt die Zugabe der Monomeren A bis E in Form einer wässrigen Monomerenemulsion.

Bei der Herstellung des Polymerisats B durch wässrige radikalische Emulsionspolymerisation in Gegenwart von Polymerisat A werden die Monomere vorteilhaft dem wässrigen Reaktionsmedium kontinuierlich in einer oder mehreren Portionen mit gleichbleibenden oder sich verändernden Mengenströmen zuzugeben. Insbesondere vorteilhaft werden die Monomeren dem wässrigen Reaktionsmedium in Form einer Mischung zugegeben. Mit Vorteil erfolgt die Zugabe der Monomere in Form einer wässrigen Monomerenemulsion.

Erfindungsgemäß werden im Rahmen des vorliegenden Verfahrens Dispergiermittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: C₄ bis C₁₂) sowie ethoxylierte Fettalkohole (EO-Grad: 3 bis 80; Alkylrest: C₈ bis C₃₆). Beispiele hierfür sind die Lutensol® A-Marken (C₁₂C₁₄-Fettalkoholethoxylate, EO-Grad: 3 bis 8), Lutensol® AO-Marken (C₁₃C₁₅Oxoalkoholethoxylate, EO-Grad: 3 bis 30), Lutensol® AT-Marken (C₁₆C₁₈-Fettalkoholethoxylate, EO-Grad: 11 bis 80), Lutensol® ON-Marken (C₁₀-Oxoalkoholethoxylate, EO-Grad: 3 bis 11) und die Lutensol® TO-Marken (C₁₃-Oxoalkoholethoxylate, EO-Grad: 3 bis 20) der Fa. BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel (1) 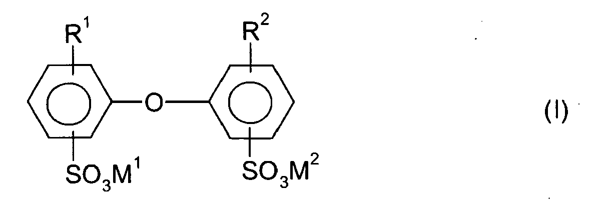 worin R¹ und R² H-Atome oder C₄- bis C₂₄-Alkyl bedeuten und nicht gleichzeitig H-Atome sind, und M¹ und M² Alkalimetallionen und/oder Ammoniumionen sein können, als geeignet erwiesen. In der allgemeinen Formel (I) bedeuten R¹ und R² bevorzugt lineare oder verzweigte Alkylreste mit 6 bis 18 C-Atomen, insbesondere mit 6, 12 und 16 C-Atomen oder Wasserstoff, wobei R¹ und R² nicht beide gleichzeitig H-Atome sind. M¹ und M² sind bevorzugt Natrium, Kalium oder Ammonium, wobei Natrium besonders bevorzugt ist. Besonders vorteilhaft sind Verbindungen (I), in denen M¹ und M² Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4,269,749, und im Handel erhältlich.

Geeignete kationenaktive Emulgatoren sind in der Regel einen C₆- bis C₁₈-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethytparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegen-gruppen möglichst gering nucleophil sind, wie beispielsweise Perchlorat, Sulfat, Phosphat, Nitrat und Carboxylate, wie beispielsweise Acetat, Trifluoracetat, Trichlor-acetat, Propionat, Oxalat, Citrat, Benzoat, sowie konjugierte Anionen von Organo-sulfonsäuren, wie zum Beispiel Methylsulfonat, Trifluormethylsulfonat und para-Toluolsulfonat, weiterhin Tetrafluoroborat, Tetraphenylborat, Tetrakis(pentafluoro-phenyl)borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge ≥ 0,005 und ≤ 10 Gew.-%, vorzugsweise ≥ 0,01 und < 5 Gew.-%, insbesondere ≥ 0,1 und ≤ 3 Gew.-%, jeweils bezogen auf die Monomerengesamt-menge, eingesetzt.

Die Gesamtmenge der als Dispergiermittel zusätzlich oder statt der Emulgatoren eingesetzten Schutzkolloide beträgt oft ≥ 0,1 und ≤ 10 Gew.-% und häufig > 0,2 und < 7 Gew.-%, jeweils bezogen die Monomerengesamtmenge.

Bevorzugt werden jedoch anionische und/oder nichtionische Emulgatoren und insbesondere bevorzugt anionische Emulgatoren als Dispergiermittel eingesetzt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-butyl- oder Dicumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefel-verbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Monomerengesamtmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vorgelegt werden. Es ist aber auch möglich, gegebenenfalls lediglich eine Teilmenge des Radikalinitiators im wässrigen Reaktionsmedium vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Als Reaktionstemperatur für die erfindungsgemäße radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 bar (absolut) durchgeführt werden, so dass die Polymerisationstemperatur 100 °C übersteigen und bis zu 170 °C betragen kann. Vorzugsweise werden leichtflüchtige Monomere, wie beispielsweise 2-Methyl-buten-1, 3-Methylbuten-1, 2-Methylbuten-2, Butadien, Buten-2, 2-Methylpropen, Propen, Ethylen oder Vinylchlorid unter erhöhtem Druck polymerisiert. Dabei kann der Druck 1,2, 1,5, 2, 5, 10, 15, 50, 100 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 atm (1,01 bar absolut) unter Inertgasatmosphäre, wie beispielsweise unter Stickstoff oder Argon durchgeführt.

Das wässrige Reaktionsmedium kann prinzipiell in untergeordneten Mengen auch wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefel-verbindungen, aber auch aliphatische und/oder aromatische Aldehyde, wie Acet-aldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclo-hexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Monomerengesamtmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge die radikalkettenübertragende Verbindung dem wässrigen Reaktionsmedium vorteilhaft auch gemeinsam mit den Monomeren A bis D während der Polymerisation zugeführt werden.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Monomerengesamtmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise US-A 2,520,959 und US-A 3,397,165).

Insbesondere wird eine Polymersaat eingesetzt, deren Polymersaatpartikel eine enge Teilchengrößenverteilung und gewichtsmittlere Durchmesser D_{w} ≤ 100 nm, häufig ≥ 5 nm bis ≤ 50 nm und oft ≥ 15 nm bis ≤ 35 nm aufweisen. Die Bestimmung der gewichts-mittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere D_{w50}-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser D_{w50} und zahlenmittleren Teilchendurchmesser D_{N50} [D_{w50}/D_{N50}] ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Monomerengesamtmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Die Gesamtmenge an Fremdpolymersaat kann vor Beginn der Zugabe der Monomeren A bis E im Reaktionsgefäß vorgelegt werden. Es ist aber auch möglich, lediglich eine Teilmenge der Fremdpolymersaat vor Beginn der Zugabe der Monomeren A bis E im Reaktionsgefäß vorzulegen und die verbleibende Restmenge während der Polymerisattion zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Beginn der Zugabe der Monomeren A bis E im Reaktionsgefäß vorgelegt.

Der über quasielastische Lichtstreuung (ISO-Norm 13 321) ermittelte zahlenmittlere Teilchendurchmesser (cumulant z-average) des Polymerisats B, das durch wässrige radikalische Emulsionspolymerisation in Gegenwart von Polymerisat A hergestellt wurde, liegt bei 60-500 nm, vorzugsweise bei 80-320 nm, besonders bevorzugt bei 150-300 nm. Das Polymerisat B kann dabei ein bi- oder multimodale Teilchengrößenverteilung aufweisen.

Die erfindungsgemäß erhaltene wässrige Polymerisatdispersion weist üblicherweise einen Polymerisatfeststoffgehalt von ≥ 10 und ≤ 80 Gew.-%, häufig ≤ 20 und ≤ 70 Gew.-% und oft ≥ 25 und ≤ 60 Gew.-%, jeweils bezogen auf die wässrige Polymerisatdispersion, auf.

Häufig werden bei den erhaltenen wässrigen Polymerisatdispersionen die Restgehalte an nicht umgesetzten Monomeren sowie anderen leichtsiedenden Verbindungen durch dem Fachmann ebenfalls bekannte chemische und/oder physikalische Methoden [siehe beispielsweise EP-A 771328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115] herabgesetzt.

Das aus wässriger radikalischer Emulsionspolymerisation erhaltene Polymerisat wird durch dem Fachmann bekannte Trocknungstechniken in ein Polymerpulver überführt. Die Überführung in ein Pulver kann durch Koagulation oder Sprühtrocknung geschehen. Vor oder während der Trocknung können der Dispersion spezielle Additive zugegeben werden, um die Pulvereigenschaften zu verbessern, beipielsweise Antioxidantien, Rieselhilfsmittel und Antiblockmittel.

Die Antioxidantien werden als Granulat, pulverförmiger Feststoff oder vorzugsweise als Dispersion der Polymerisatdispersion zugemischt. Die Zugabe von Antioxidantien ist z. B. in EP 44 159 und EP 751 175 beschrieben. Die Zugabe von Antioxidantien erfolgt insbesondere, um die Selbsterwärmung und Selbstentzündung des getrockneten Produkts bei Lagerung und Transport zu vermeiden. Bevorzugte Antioxidantien sind ausgewählt aus der Stoffklasse der sterisch gehinderten Alkylphenole oder ihrer Kondensationsprodukte. Mögliche Antioxidantien sind ersichtlich aus Plastics Additives Handbook, 5th ed., München 2000, 1-139, Hanser Verlag.

Die Rieselhilfsmittel und Antiblockmittel werden in Mengen von 0,1 bis 15 Gew.-%, vorzugsweise 3 bis 8 Gew.-%, zugesetzt. In einer bevorzugten Ausführungsform werden hydrophobierte Rieselhilfsmittel und Antiblockmittel verwendet. Unter den Rieselhilfsmittel und Antiblockmitteln versteht man feinteilige Pulver beispielsweise aus Kalziumcarbonat, Talkum oder Kieselsäuren. Hydrophobierte Rieselhilfsmittel und Antiblockmittel sind beispielsweise mit Fettsäuren oder Fettalkoholen, beispielsweise Stearinsäure oder Palmitinsäure, beschichtetes Kalziumcarbonat oder durch Oberflächenbehandlung mit reaktiven Silanen, wie beispielsweise Chlorsilanen oder Hexamethyldisilazan, chemisch modifizierte Kieselsäuren. Vorzugsweise setzt man mit Stearinsäure beschichtetes Kalziumcarbonat ein. Die Rieselhilfsmittel und Antiblockmittel weisen vorzugsweise eine Primärteilchengrösse kleiner als 100 nm auf.

Zur Verbesserung der Pulvereigenschaften und Zerkleinerung des aus der Trocknung erhaltenen Pulvers können optional in einem anschließenden Schritt alle dem Fachmann bekannten Mühlen für Feinmahlung verwendet werden. Dies sind Schneidmühlen, Prallmühlen wie Rotorprallmühlen oder Strahlprallmühlen, Walzenmühlen wie Wälzmühlen, Walzenstühle oder Gutbett-Walzenmühlen, Mahlkörpermühlen wie Kugelmühlen, Stabmühlen, Autogenmühlen, Planetenmühlen, Schwingmühlen, Zentrifugalmühlen oder Rührwerkmühlen sowie Mahltrockner. Zerkleinerungsmaschinen sind beschrieben in Ullmann's Encyclopedia of Industrial Chemistry, 6th ed. Vol. 11, p. 70 und Vol. 33, p 41-81. Vorzugsweise werden Mühlen verwendet, die mit einer Siebklassierung ausgestattet sind, besonders bevorzugte Geräte sind Siebfeingranulatoren und Rotorfeingranulatoren (Reibschnitzler).

Die Herstellung der erfindungsgemäßen Formmassen aus dem erfindungsgemäßen Polymerisatpulver kann in jeder beliebigen Weise nach allen bekannten Methoden erfolgen.

Gegenstand der Erfindung ist auch die Verwendung der beschriebenen Formmassen zur Herstellung von Formteilen, wie Profilen, Platten oder Halbzeugen, Folien, Fasern oder auch von Schäumen. Die Verarbeitung kann mittels der bekannten Verfahren der Thermoplastverarbeitung durchgeführt werden, insbesondere kann die Herstellung durch Thermoformen, Extrudieren, Spritzgiessen, Kalandrieren, Hohlkörperblasen, Pressen, Presssintern, Tiefziehen oder Sintern, vorzugsweise durch Extrudieren erfolgen.

Folgende nicht einschränkende Beispiele sollen die Erfindung erläutern:
Herstellung der Dispersion

Die Feststoffgehalt wurde bestimmt, indem eine definierte Menge der wässrigen Polymerisatdispersion (ca. 5 g) bei 140 °C in einem Trockenschrank bis zur Gewichtskonstanz getrocknet wurde. Es wurden zwei separate Messungen durchgeführt. Der im Beispiel angegebene Wert stellt den Mittelwert der beiden Messergebnisse dar.

Die Bestimmung der Glasübergangstemperatur erfolgte gemäß DIN 53765 mittels eines DSC 820-Geräts, Serie TA 8000 der Fa. Mettler-Toledo.

### Beispiel 1

In einem 2 I-Vierhalskolben, ausgerüstet mit einem Anker-Rührer, Rückflußkühler und zwei Dosiereinrichtungen wurden unter Stickstoffatmosphäre 230 g entionisiertes Wasser, 10,2 g einer wässrigen Polystyrolsaat (Feststoffgehalt 33 Gew.-%, zahlen-mittlerer Teilchendurchmesser 32 nm), 60,0 g 1-Octen und 0,84 g Natriumpersulfat vorgelegt und unter Rühren auf 90 °C aufgeheizt. Der Monomerzulauf 1, bestehend aus 133 g entionisiertem Wasser, 5,6 g einer 45 gew.-%igen wässrigen Lösung von Dowfax® 2A1 (Produkt der Fa. Dow Chemical Company), 22,4 g einer 3 gew.-%igen wässrigen Lösung von Natriumpyrophosphat, 1,68 g Allylmethacrylat und 317,5 g n-Butylacrylat, und der Initiatorzulauf, bestehend aus 70 g entionisiertem Wasser und 3,36 g Natriumpersulfat, wurden bei Erreichen der Reaktionstemperatur von 90 °C gleichzeitig gestartet. Der Monomerzulauf 1 wurde kontinuierlich über 3 Stunden zudosiert. Der Initiatorzulauf wurde kontinuierlich über 6 h zudosiert. Nach Ende des Monomerzulaufs 1 wurde 1,5 h bei 90 °C nachpolymerisiert. Anschließend wurde der Monomerzulauf 2, bestehend aus 60,0 g entionisiertem Wasser, 2,8 g einer 45 gew.-%igen wässrigen Lösung von Dowfax® 2A1 und 42,0 g Methylmethacrylat, kontinuierlich über 1 h zudosiert. Anschließend wurde 1 h bei 90 °C nachpolymerisiert, die Dispersion auf Raumtemperatur abgekühlt und mit einer 10 gew.-%igen wässrigen Lösung von Ammoniak auf einen pH-Wert von 7,5 eingestellt. Der Feststoffgehalt der Dispersion betrug 43,1 %. Die mittlere Teilchengröße der Dispersion war 138 nm. Die niedrigste Glasübergangstemperatur des Polymerisats betrug -46 °C.

### Vergleichsbeispiel 1

In einem 2 I-Vierhalskolben, ausgerüstet mit einem Anker-Rührer, Rückflußkühler und zwei Dosiereinrichtungen wurden unter Stickstoffatmosphäre 230 g entionisiertes Wasser, 10,2 g einer wässrigen Polystyrolsaat (Feststoffgehalt 33 Gew.-%, zahlen-mittlerer Teilchendurchmesser 32 nm) und 0,84 g Natriumpersulfat vorgelegt und unter Rühren auf 90 °C aufgeheizt. Der Monomerzulauf 1, bestehend aus 135 g entionisiertem Wasser, 5,6 g einer 45 gew.-%igen wässrigen Lösung von Dowfax® 2A1, 22,4 g einer 3 gew.-%igen wässrigen Lösung von Natriumpyrophosphat, 1,68 g Allylmethacrylat und 376,3 g n-Butylacrylat, und der Initiatorzulauf, bestehend aus 70 g entionisiertem Wasser und 3,36 g Natriumpersulfat, wurden bei Erreichen der Reaktionstemperatur von 90 °C gleichzeitig gestartet. Der Monomerzulauf 1 wurde kontinuierlich über 3 Stunden zudosiert. Der Initiatorzulauf wurde kontinuierlich über 6 h zudosiert. Nach Ende des Monomerzulaufs 1 wurde 1,5 h bei 90 °C nachpolymerisiert. Anschließend wurde der Monomerzulauf 2, bestehend aus 60,0 g entionisiertem Wasser, 2,8 g einer 45 gew.-%igen wässrigen Lösung von Dowfax® 2A1 und 42,0 g Methylmethacrylat, kontinuierlich über 1 h zudosiert. Anschließend wurde 1 h bei 90 °C nachpolymerisiert, die Dispersion auf Raumtemperatur abgekühlt und mit einer 10 gew.-%igen wässrigen Lösung von Ammoniak auf einen pH-Wert von 7,5 eingestellt. Der Feststoffgehalt der Dispersion betrug 44,7 %. Die mittlere Teilchengröße der Dispersion war 151 nm. Die niedrigste Glasübergangstemperatur des Polymerisats betrug -41 °C.

### Herstellung der thermoplastischen Formmassen

Die Dispersionen des Beispiels 1 und des Vergleichsbeispiels 1 wurden bei Raumtemperatur getrocknet und mechanisch zerkleinert. Dazu wurde das Polymer mit Trockeneis (festes Kohlendioxid mit -78 °C) gekühlt und mit einer Schlagmühle (Analysenmühle A 10 der Fa. Janke & Kunkel IKA Labortechnik) zu einem Pulver zermahlen.

### Beispiel 2

Eine Mischung aus
100 Teilen PVC-Pulver (Solvin 265 RE, Fa. Solvin)
7 Teilen Pb-Stabilisator (Baeropan R 2930 SP 1, Fa. Baerlocher)
6 Teilen CaCO₃ (Hydrocarb 95 T, Fa. Omya) und
4 Teilen TiO₂ (Kronos 2220, Fa. Kronos International)
wurde zusammen mit 5 Teilen des Polymerpulvers des Beispiels 1 und des Vergleichsbeispiels 1 auf eine Walze (Doppelwalzwerk der Fa. Collin GmbH, Typ 110P) gegeben, und es wurde durch 8 min Walzen bei 180°C ein Walzfell hergestellt. Dieses wurde bei 190 °C für 8 min bei 15 bar und anschließend 5 min bei 200 bar zu einer Pressplatte gepresst, die Abkühlung erfolgte über 8 min bei 200 bar. Aus der Pressplatte wurden Probekörper gesägt und anschließend gekerbt. Die Bestimmung der Kerbschlagzähigkeiten erfolgte nach der Charpy-Methode in Anlehnung an DIN 53753. Es wurden Probekörper einer Dicke von 3 mm verwendet, die mit einer Doppel-V-Kerbe mit dem Kerbradius 0,1 mm versehen wurden. Die Messung erfolgte mit einem Pendelschlagwerk der Fa. Zwick (Type B5102E), der Nennwert des Arbeitsvermögens des Pendels war 1 J. Es wurde der Mittelwert aus zehn Einzelmessungen gebildet.

| Polymerpulver | Kerbschlagzähigkeit | Standardabweichung |
|---|---|---|
| Beispiel 1 | 23,8 | 1,0 |
| Vergleichsbeispiel 1 | 25,4 | 2,4 |

### Beispiel 3

Eine Mischung aus
90 Teilen PVC-Pulver (Solvin 257 RF, Fa. Solvin)
0,3 Teilen Gleitmittel Loxiol G72, Fa. Cognis
0,8 Teilen Gleitmittel Loxiol G16, Fa. Cognis
1,1 Teilen Sn-Stabilisator (Irgastab 17 MOK, Fa. Ciba)
wurde zusammen mit 5 Teilen des Polymerpulvers des Beispiels 1 und des Vergleichsbeispiels 1 auf eine Walze (Doppelwalzwerk der Fa. Collin GmbH, Typ 110P) gegeben, und es wurde durch 8 min Walzen bei 170 °C ein Walzfell hergestellt. Dieses wurde bei 180 °C für 8 min bei 15 bar und anschließend 5 min bei 200 bar zu einer Pressplatte gepresst, die Abkühlung erfolgte über 8 min bei 200 bar. Aus der Pressplatte wurden Probekörper gesägt und anschließend gekerbt. Die Bestimmung der Kerbschlagzähigkeiten erfolgte wie unter Beispiel 2 beschrieben.

| Polymerpulver | Kerbschlagzähigkeit | Standardabweichung |
|---|---|---|
| Beispiel 1 | 20 | 1,0 |
| Vergleichsbeispiel 1 | 16 | 0,7 |

## Patentansprüche

1. Verfahren zur Herstellung eines Polymerisatpulvers enthaltend Emulsionspolymerisatteilchen, die eine Kernschale-Struktur aufweisen, mit einem Anteil an vernetztem Polymerisat A > 50 %, wobei Polymerisat A
| | |
|---|---|
| 1 bis 50 Gew.-% | wenigstens eines 2 bis 12 C-Atome aufweisenden Alkens [Monomer A] und |
| 30 bis 99 Gew.-% | wenigstens eines Esters auf Basis einer 3 bis 6 C-Atome aufweisenden α,β-monoethylenisch ungesättigten Mono- oder Dicarbonsäure und eines 1 bis 18 C-Atome aufweisenden Alkanols [Monomer B] und |
| 0,1 bis 20 Gew.-% | wenigstens einer vernetzend wirkenden, wenigstens zwei nicht konjugierte Vinylgruppen aufweisenden Verbindung [Monomer C] sowie gegebenenfalls |
| 0 bis 10 Gew.-% | einer 3 bis 6 C-Atome aufweisenden α,β-monoethylenisch ungesättigten Mono- oder Dicarbonsäure und/oder deren Amid [Monomer D] und |
| 0 bis 30 Gew.-% | einer sich von den Monomeren A bis D unterscheidenden α,β-ethylenisch ungesättigten Verbindung [Monomer E] |
als Monomerbausteine enthält und sich die Monomeren A bis E zu 100 Gew.-% addieren, **dadurch gekennzeichnet, dass**
a) das Polymerisat A als Polymerisatdispersion A in einem ersten Schritt hergestellt wird
b) in einem weiteren Schritt ein Polymerisat B in Gegenwart der polymerisatdisperion A hergestellt wird.

2. Verfahren gemäß Anspruch 1, mit einem Anteil an vernetztem Polymerisat A > 50 % wobei Polymerisat A
1 bis 49,9 Gew.-% Monomere A
50 bis 98,99 Gew.-% Monomere B
0,1 bis 10 Gew.-% Monomere C enthält.

3. Verfahren gemäß Anspruch 1 oder 2, mit einem Anteil an vernetztem Polymerisat A > 50 %, **dadurch gekennzeichnet, dass** die Glasübergangstemperatur des Polymerisats A < -40 °C beträgt.

4. Verfahren gemäß einem der Ansprüche 1 bis 3 mit einem Anteil an vernetztem Polymerisat A > 50 %, wobei Monomer A ausgewählt ist aus der Gruppeder 1-Alkene, wie Ethen, Propen, Buten-1, Penten-1, Hexen-1, Hepten-1, Octen-1, Nonen-1, Decken-1, Undecen-1, Dodecen-1, 2,4,4-Trimethylpenten-1, 2,4-Dimethylhexen-1, 6,6-Dimethylhepten-1 oder 2-Methylocten-1.

5. Verfahren gemäß einem der Ansprüche 1 bis 4, mit einem Anteil an vernetztem Polymerisat A > 50 %, wobei Monomer B ausgewählt ist aus der Gruppe n-Butylacrylat und/oder 2-Ethylhexylacrylat.

6. Verfahren gemäß einem der Ansprüche 1 bis 5, mit einem Anteil an vernetztem Polymerisat A > 50 %, wobei Monomer C ausgewählt ist aus der Gruppe Allylmethacrylat und/oder 1,4-Butylenglykoldiacrylat.

7. Verfahren gemäß einem der Ansprüche 1 bis 6, mit einem Anteil an vernetztem Polymerisat A > 50 %, wobei dass Polymerisat A
| | |
|---|---|
| 5 bis 40 Gew.-% | Penten-1, Hexen-1 und/oder Octen-1 [Monomere A], und |
| 58 bis 94,9 Gew.-% | n-Butylacrylat und/oder 2-Ethylhexylacrylat [Monomere B], sowie |
| 0,1 bis 2 Gew.-% | Allylmethacrylat und/oder 1,4-Butylenglykoldiacrylat [Monomere C], |
enthält.

8. Verwendung des Polymerisatpulvers gemäß einem der Ansprüche 1 bis 7, als Schlagzähmodifizierungsmittel für halogenhaltige Thermoplasten.

9. Polyvinylchlorid-Formmassen enthaltend ein Polymerisatpulver gemäß einem der Ansprüche 1 bis 7.

10. Formkörper enthaltend Polyvinylchlorid-Formmassen gemäß Anspruch 9.

## Claims

1. A process for production of a polymer powder comprising emulsion polymer particles which have a core-shell structure, with > 50% content of crosslinked polymer A, where polymer A comprises, as monomer units,
| | |
|---|---|
| from 1 to 50% by weight | of at least one alkene which has from 2 to 12 carbon atoms [monomer A], and |
| from 30 to 99% by weight | of at least one ester based on an α,β-monoethylenically unsaturated mono- or dicarboxylic acid which has from 3 to 6 carbon atoms and on an alkanol which has from 1 to 18 carbon atoms [monomer B], and |
| from 0.1 to 20% by weight | of at least one compound which has at least two unconjugated vinyl groups which has crosslinking auction [monomer C], and also, if appropriate, |
| from 0 to 10% by weight | of an α,β-monoethylenically unsaturated mono- or dicarboxylic acid which has from 3 to 6 carbon atoms, and/or an amide thereof [monomer D], and |
| from 0 to 30% by weight | of an α,β-ethylenically unsaturated compound which differs from the monomers A to D [monomer E], |
and monomers A to E give a total of 100% by weight, which comprises
a) preparing the polymer A as polymer dispersion A in a first step, and
b) in a further step, preparing a polymer B in the presence of the polymer dispersion A.

2. The process according to claim 1, with > 50% content of crosslinked polymer A, where polymer A comprises
from 1 to 49.9% by weight of monomers A,
from 50 to 98.99% by of monomers B,
from 0.1 to 10% by weight of monomers C.

3. The process according to claim 1 or 2, with > 50% content of crosslinked polymer A, wherein the glass transition of the polymer A is < -40°C.

4. The process according to any of claim 1 to 3, with > 50% content of crosslinked polymer A, where monomer A has been selected from the group of the 1-alkenes, such as ethene, propene, 1-butene, 1-pentene, 1-hexene, 1-heptene, 1-octene, 1-nonene, 1-decene, 1-undecene, 1-dodecene, 2,4,4-trimethyl-1-pentene, 2,4-dimethyl-1-hexene, 6,6-dimethyl-1-heptene, and 2-methyl-1-octene.

5. The process according to any of claims 1 to 4, with > 50% content of crosslinked polymer A, where monomer B has been selected from the group: n-butyl acrylate and/or 2-ethylhexyl acrylate.

6. The process according to any of claims 1 to 5, with > 50% content of crosslinked polymer A, where monomer C has been selected from the group: allyl methacrylate and/or butylene 1,4-glycol diacrylate.

7. The process according to any of claims 1 two 6, with >50% content of crosslinked polymer A, where polymer A comprises
from 5 to 40% by weight of 1-pentene, 1-hexene, and/or 1-octene [monomers A], and
from 58 to 94.9% by weight of n-butyl acrylate and/or 2-ethylhexyl acrylate [monomers B], and
from 0.1 to 2% by weight of allyl methacrylate and/or butylene 1,4-glycol diacrylate [monomers C].

8. The use of the polymer powder according to any of claims 1 to 7, as impact modifier for thermoplastics comprising halogen.

9. A polyvinyl chloride molding composition comprising a polymer powder according to of claims 1 to 7.

10. A molding comprising polyvinyl chloride molding compositions according to clam 9.

## Revendications

1. Procédé de préparation d'une poudre de polymère contenant des particules de polymère en émulsion qui présentent une structure noyau-coquilie, avec une proportion de polymère réticulé A > 50%, où le polymère A contient
1 à 50% en poids d'au moins un alcène présentant 2 à 12 atomes de carbone [monomère A], et
30 à 99% en poids d'au moins un ester à base d'un acide monocarboxylique ou dicarboxylique éthyléniquement α,β-monoinsaturé présentant 3 à 6 atomes de carbone et d'un alcanol présentant 1 à 18 atomes de carbone [monomère B], et
0,1 à 20% en poids d'au moins un composé à effet réticulant, présentant au moins deux groupes vinyle non conjugués [monomère C] ainsi que le cas échéant 0 à 10% en poids d'un acide monocarboxylique ou dicarboxylique éthyléniquement α,β-monoinsaturé comprenant 3 à 6 atomes de carbone et/ou son amide [monomère D] et
0 à 30% en poids d'un composé éthyléniquement α,β-monoinsaturé différent des monomères A à D [monomère E],
comme éléments monomères et les monomères A à E forment 100% en poids au total, **caractérisé en ce que**
a) le polymère A est préparé sous forme de dispersion polymère A dans une première étape
b) dans une autre étape, on prépare un polymère B en présence de la dispersion polymère A.

2. Procédé selon la revendication 1 avec une proportion de polymère réticulé A > 50%, où le polymère A contient
- 1 à 49,9% en poids de monomères A
- 50 à 98,99% en poids de monomères B
- 0,1 à 10% en poids de monomères C.

3. Procédé selon la revendication 1 ou 2, avec une proportion de polymère réticulé A > 50%, **caractérisé en ce que** la température de transition vitreuse du polymère A < -40°C.

4. Procédé selon l'une quelconque des revendications 1 à 3 avec une proportion de polymère réticulé A > 50%, où le monomère A est choisi dans le groupe des 1-alcènes, tels que l'éthylène, le propène, le butène-1, le pentène-1, l'hexène-1, l'heptène-1, l'octène-1, le nonène-1, le décène-1, l'undécène-1, le dodécène-1, le 2,4,4-triméthylpenténe-1, le 2,4-diméthylhexène-1, le 6,6-diméthylheptène-1 ou le 2-méthyloctène-1.

5. Procédé selon l'une quelconque des revendications 1 à 4 avec une proportion de polymère réticulé A > 50%, où le polymère B est choisi dans le groupe formé par l'acrylate de n-butyle et/ou l'acrylate de 2-éthylhexyle.

6. . Procédé selon l'une quelconque des revendications 1 à 5 avec une proportion de polymère réticulé A > 50%, où le polymère C est choisi dans le groupe formé par le méthacrylate d'allyle et/ou le diacrylate de 1,4-butylèneglycol.

7. Procédé selon l'une quelconque des revendications 1 à 6, avec une proportion de polymère réticulé A > 50%, où le polymère A contient
5 à 40% en poids de pentène-1, d'hexène-1 et/ou d'octène-1 [monomères A], et
58 à 94,9% en poids d'acrylate de n-butyle et/ou d'acrylate de 2-éthylhexyle [monomères B], ainsi que
0,1 à 2% en poids de méthacrylate d'allyle et/ou de diacrylate de 1,4-butylèneglycol [monomères c].

8. Utilisation de la poudre de polymère selon l'une quelconque des revendications 1 à 7, comme agent de modification de la résilience pour des thermoplastiques contenant des halogènes.

9. Masses de moulage à base de poly(chlorure de vinyle) contenant une poudre de polymère selon l'une quelconque des revendications 1 à 7.

10. Corps façonnés contenant des masses de moulage à base de poly(chlorure de vinyle) selon la revendication 9.
